# FASCICULE DE BREVET EUROPEEN

(11) **EP 3 599 220 B1**
(45) Date de publication et mention de la délivrance du brevet: **21.04.2021**
(21) Numéro de dépôt: 19185875.2
(22) Date de dépôt: 11.07.2019
(51) Int. Cl.: C01B 39/02, C09D 5/16

(54) **ZEOLITHE DOPEE PAR UN CATION DE METAL DE TRANSITION ET MODIFIEE PAR UN AMMONIUM QUATERNAIRE, PREPARATION ET UTILISATION**
METALLDOTIERTER UND AMMONIUMMODIFIZIERTER ZEOLITH, SEINE HERSTELLUNG UND SEINE VERWENDUNG
TRANSITION METAL-DOPED AND QUATERNARY AMMONIUM-MODIFIED ZEOLITE, PREPARATION AND USE THEREOF

(30) Priorité: 26.07.2018 FR 1800820
(43) Date de publication de la demande: 29.01.2020
(73) Titulaire: ENERCAT, 56270 Ploemeur (FR)
(72) Inventeur: ROHART, Emmanuel, 56520 GUIDEL (FR); BIZZARO, Sylvie, 56530 QUEVEN (FR); MONNIER, Patrick, 56270 PLOEMEUR (FR)
(74) Mandataire: Eveillard, Sophie

(56) Documents cités:
- TOP A ET AL: "Silver, zinc, and copper exchange in a Na-clinoptilolite and resulting effect on antibacterial activity", APPLIED CLAY SCI, ELSEVIER, AMSTERDAM, NL, vol. 27, no. 1-2, 1 octobre 2004 (2004-10-01), pages 13-19, XP004559402, ISSN: 0169-1317, DOI: 10.1016/J.CLAY.2003.12.002
- JASNA HRENOVIC ET AL: "Antibacterial activity of heavy metal-loaded natural zeolite", JOURNAL OF HAZARDOUS MATERIALS, ELSEVIER, AMSTERDAM, NL, vol. 201, 23 novembre 2011 (2011-11-23), pages 260-264, XP028123548, ISSN: 0304-3894, DOI: 10.1016/J.JHAZMAT.2011.11.079 [extrait le 2011-12-01]
- Mashitah Mad ET AL: "Review of modified Zeolites by surfactant and Silver as antibacterial agents", Journal of Advanced Research in Materials Science Issue, vol. 36 1 janvier 2017 (2017-01-01), 8 octobre 2017 (2017-10-08), pages 1-20, XP055586941, Extrait de l'Internet: URL:http://www.akademiabaru.com/doc/ARMSV3 6_N1_P1_20.pdf [extrait le 2019-05-08]
- DATABASE CA [Online] CHEMICAL ABSTRACTS SERVICE, COLUMBUS, OHIO, US; 11 septembre 1996 (1996-09-11), MATSUI, MASAHIRO ET AL: "Resin compositions for control of microorganisms in water", XP002791110, extrait de STN Database accession no. 125:150705 & JP H08 164393 A (KANEBO LTD., JAPAN; KANEBO KASEI KK; KANEBO CHEMICAL INDUSTRIES INC.) 25 juin 1996 (1996-06-25)
- DATABASE CA [Online] CHEMICAL ABSTRACTS SERVICE, COLUMBUS, OHIO, US; 8 février 1986 (1986-02-08), HAGIWARA, ZENJI ET AL: "Zeolite disinfecting agents", XP002791111, extrait de STN Database accession no. 104:30424 & JP S60 181002 A (SINANEN NEW CERAMIC K. K., JAPAN; KANTO CHEMICAL CO., INC.) 14 septembre 1985 (1985-09-14)
- Nor Syafawani Sarah Md Saad et al.: "ANTIMICROBIAL ACTIVITY OF COPPER KAOLINITE AND SURFACTANT MODIFIED COPPER KAOLINITE AGAINST GRAM POSITIVE AND GRAM NEGATIVE BACTERIA", Jurnal Teknologi Jurnal Teknologi, vol. 78 1 janvier 2016 (2016-01-01), pages 127-132, XP055586917, Extrait de l'Internet: URL:http://eprints.utm.my/id/eprint/71305/ 1/NorSyafawaniSarah2016_Antimicrobialactiv ityofcopperkaolinite.pdf [extrait le 2019-05-08]

## Description

La présente invention concerne une zéolithe dopée par au moins un cation d'un métal de transition et modifiée par au moins un agent choisi parmi les ammoniums quaternaires et les sels d'acides gras en C₈-C₂₀, son procédé de préparation, les compositions comprenant ladite zéolithe ainsi que ses utilisations en particulier pour limiter voire empêcher la formation de biofilms.

Les biofilms sont formés par un ensemble plus ou moins complexe de micro-organismes : bactéries, champignons, protozoaires, adhérant à la fois entre eux et à une surface. Les biofilms se forment dans l'eau ou dans des milieux exposés à l'humidité et se caractérisent par la sécrétion d'une matrice adhésive et protectrice. Les biofilms peuvent se développer sur toutes sortes de surface naturelle ou synthétique comme les cailloux, rochers, les plantes, ou encore les canalisations, coques de navires... Dans certaines conditions, un biofilm peut rapidement devenir macroscopique ce qui conduit généralement à une modification des propriétés de la surface sur laquelle il s'est développé.

La formation d'un biofilm est généralement la première étape de la formation de l'encrassement biologique, encore appelé bio-encrassement, bio-salissure ou « biofouling » en langue anglaise. En effet, les différents stades de la progression -c'est-à-dire la formation et le développement- du bio-encrassement sur un support se caractérisent par la colonisation dudit support par des groupes d'organismes vivants différents, chacun de ses groupes d'organismes étant représentatif d'un stade de la progression de l'encrassement biologique.

Lorsqu'on considère plus particulièrement le cas des coques de navire, l'encrassement biologique conduit à une augmentation parfois non négligeable de la masse dudit navire qui a pour conséquence de ralentir sa course et d'augmenter l'énergie, en particulier le carburant, nécessaire pour son déplacement. En conséquence, de nombreuses recherches sont effectuées afin de mettre au point des revêtements anti-salissures (« anti-fouling » en langue anglaise) efficaces et respectueux de l'environnement.

Ce problème technique est à l'origine de la présente invention, plus spécifiquement le problème à l'origine de la présente invention est la formation de biofilms sur les surfaces d'objets industriels immergés tels que par exemple les coques de navire, les hydroliennes, les canalisations, les pontons, les cordages ou encore sur des objets non immergés mais placés dans des environnements à fort taux d'humidité.

Plusieurs approches ont été envisagées pour lutter contre la formation de biofilms parmi lesquelles le développement de matériaux biocides ou le développement de matériaux visant à gêner l'adhésion du biofilm.

Le cuivre, sous différentes formes, est utilisé depuis longtemps en tant que biocide notamment dans des peintures antisalissures dites peintures « anti-fouling ». A des concentrations importantes, le cuivre peut être dangereux pour certains organismes vivants, il est donc nécessaire qu'il soit libéré dans l'environnement de manière continue, contrôlée et dans des quantités réduites.

L'oxyde de cuivre, bien qu'utilisé principalement sous forme macroscopique, est également utilisé sous forme de nanoparticules et il est réputé présenter, sous cette forme, des propriétés anti-fouling améliorées par rapport à la forme macroscopique. Cependant les nanoparticules ont tendance à former des agrégats et, de ce fait, ne conduisent pas à des produits / revêtements hétérogènes.

Une autre solution alternative présentée dans le document « Fabrication of copper nanowire films and their incoporation into polymer matrices for antibacterial and marine antifouling applications » Jiang et al. Advanced Materials Interfaces, vol.2, issue 3, 1400483, February 16, 2015 décrit l'utilisation de longs nanotubes de cuivre dans une matrice PDMS (polydiméthylsiloxane) afin de lui procurer des propriétés antifouling.

Par ailleurs, durant les deux dernières décennies, l'utilisation de zéolithes pour la préparation de matériaux antibactériens s'est développée. Les zéolithes ne possèdent pas de propriétés bactéricides propres cependant du fait de leur capacité à échanger des cations, elles peuvent accueillir des cations de métaux, on parle alors de « dopage » de la zéolithe, notamment il peut s'agir de cations de métaux de transition présentant des propriétés bactéricides. Ainsi la demande JPH08164393 décrit des résines présentant des propriétés antimicrobiennes comprenant une zéolithe dopée par un métal de type argent, cuivre ou zinc sous forme ionique.

Les documents suivants décrivent également des zéolithes dopées par des cations et présentant une activité anti-microbienne :
- JP S60 181002,
- ainsi que « Silver, zinc, and copper exchange in a Na-clinoptilolite and resulting effect on antibacterial activity » de TOP A. et al. APPLIED CLAY SCI, ELSEVIER, AMSTERDAM, NL, vol.27 no 1-2 (2004-10-01) pages 13-19 » et « Antibacterial activity of heavy metal loaded natural zeolite » de JASNA HRENOVIC et al. Journal of Hazardous Materials, ELSEVIER, AMSTERDAM, NL, vol.201, (2011-11-23) pages 260-264 qui concernent plus particulièrement des Na clinoptilolites .

« Review of modified Zeolites by surfactants and silver as antibacterial agent » Mashitah Mad etal., Journal of abvanced research in Materials Sciences Issue, vol. 36 pages 1-20 décrit également des zéolithes uniquement dopées par des cations d'une part et des zéolites uniquement modifiées par un ammonium quaternaire d'autre part.

« Antimicrobial activity of copper kaolinite and surfactant modified copper kaolinite against Gram positive and gram negative bacteria » de Nor Syafawani et al. Jurnal Teknologo vol.78, pages 127-132 concerne une kaolinite dopée au cuivre et modifiée par un tensioactif ainsi que son activité antimicrobienne contre les bactéries Gram + et Gram -.

Des zéolithes dopées par au moins un cation métallique et comprenant des ions ammoniums ont également déjà été décrites par exemple dans la demande de brevet WO2011/066391 . Cette demande vise plus particulièrement des dispositifs tels que des implants chirurgicaux en plastique dans lesquels sont intégrées des zéolithes dont une partie des ions présents ont été échangés par des ions ammoniums et des ions métalliques présentant des propriétés antimicrobiennes par exemple à base de cuivre, argent, zinc, la présence d'ions ammoniums quaternaires n'étant cependant pas prévue.

Par ailleurs des zéolithes modifiées par des tensioactifs, encore appelées ZMS (ou SMZ pour « surfactant -modified zeolite » en langue anglaise) sont également connues. Plus particulièrement la zéolithe ZSM-5 est décrite dans les demandes de brevet EP2463028 ou CN106345515. Son procédé de préparation consiste à mettre une zéolithe en présence d'ions ammoniums quaternaires tels que par exemple l'hydroxyde de tetra-éthylammonium ou le bromure de tetra-n-butylammonium puis à procéder à une calcination conduisant à la décomposition totale des ions ammoniums quaternaires. Cette étape, qui met en oeuvre un échange de cations au sein de la structure, conduit à modifier ladite structure, notamment la taille des pores, de la zéolithe. Elle est parfois suivie d'une étape lors de laquelle des cations de métaux de transition sont introduits dans ladite zéolithe modifiée.

Par conséquent, il demeure toujours un besoin de disposer de zéolithes plus performantes dans ces applications, c'est-à-dire permettant de limiter voire empêcher la formation de biofilms, qui se mélangent aisément avec les différentes compositions dans lesquelles elles sont destinés à être utilisées et qui soient stables dans ces différentes compositions. Lesdites compositions sont notamment des revêtements en particulier des peintures.

De manière surprenante et avantageuse, les auteurs de la présente invention ont montré qu'une zéolithe dopée par au moins un cation d'un métal de transition et modifiée par au moins un agent choisi parmi les ammoniums quaternaires et les sels d'acides gras en C₈-C₂₀ répond à ce besoin.

Un premier objet de la présente invention vise donc une zéolithe de type aluminosilicate dopée, c'est-à-dire soumise à un échange ionique, par au moins un cation d'un métal de transition choisi dans le groupe formé par Cu⁺, Cu²⁺, Ag⁺, Zn²⁺, et modifiée en surface par au moins un agent choisi parmi les ammoniums quaternaires de formule -N(R₁R₂R₃R₄)⁺ dans laquelle les groupes R₁, R₂, R₃ et R₄, identiques ou différents, représentent des groupes alkyles en C₁-C₂₀ et les sels de sodium ou de potassium d'acides gras en C₈-C₂₀.

La zéolithe selon l'invention présente de bonnes propriétés antimicrobiennes notamment antibactériennes, antifongiques et algicides *i.e.* empêchant la prolifération des algues. A ce titre, elle présente de bonnes propriétés pour limiter voire empêcher la formation de biofilms.

Les zéolithes selon l'invention se mélangent aisément avec les différentes compositions, telles que par exemple les compositions de revêtements, de peintures, dans lesquelles elles sont destinées à être utilisées et elles sont stables une fois introduites dans ces compositions.

La présente invention vise encore un procédé de préparation de la zéolithe selon l'invention comprenant les étapes suivantes, dans cet ordre :
- disposer d'une zéolithe de type aluminosilicate,,
- mettre ladite zéolithe en contact avec au moins une solution comprenant au moins un cation d'un métal de transition choisi dans le groupe formé par Cu⁺, Cu²⁺, Ag⁺, Zn²⁺,
- récupérer la zéolithe dopée, c'est-à-dire soumise à un échange ionique, par le cation obtenue,
- mettre ladite zéolithe dopée en contact avec une solution comprenant au moins un agent choisi parmi les ammoniums quaternaires de formule -N(R1R2R3 R4)⁺ dans laquelle les groupes R1, R2, R3 et R4, identiques ou différents, représentent des groupes alkyles en C1-C20.et les sels de sodium ou de potassium d'acides gras en C8-C20,
- récupérer la zéolithe dopée et modifiée en surface obtenue.

Le procédé selon l'invention peut être mis en œuvre de façon simple, au moyen de réactifs et de matériel disponibles sur le marché.

Selon un autre aspect, la présente invention vise des compositions, notamment de peintures, comprenant au moins une zéolithe selon la présente invention.

Avantageusement, la présente invention vise des compositions comprenant au moins une zéolithe selon la présente invention et un agent choisi parmi les (co)polymères de polydiméthylsitoxane, les résines acryliques, les colorants, les pigments, les liants, les solvants organiques, les charges.

L'invention vise aussi l'utilisation de la zéolithe selon l'invention ou de la composition selon l'invention comme agent de résistance à la formation de biofilms, notamment à titre d'agent anti-salissures marines (antifouling).

Les zéolithes selon l'invention permettent l'obtention de compositions stables, en particulier de revêtements, de peintures présentant une bonne adhérence et une bonne stabilité sur les supports sur lesquels ils sont appliqués.

En particulier la zéolithe selon l'invention permet l'obtention d'une peinture, par exemple une peinture antifouling, résistante notamment sur une durée de plusieurs mois voire années, notamment 3, 6, 9, 12 mois. Les peintures selon l'invention présentent un effet de lixiviation peu élevé. Un autre avantage est par conséquent un impact écologique mesuré de la composition de peinture selon l'invention.

Les inventeurs ont remarqué que le taux de cations de métaux alcalins relargués dans l'environnement, notamment dans l'eau, par la zéolithe selon l'invention n'est pas significatif, et en tout état de cause, il est bien inférieur aux taux de cations de métaux alcalins relargués par les zéolithes dopées par des métaux alcalins (ne contenant pas d'ions ammoniums quaternaires) de l'art antérieur. Selon cet aspect, les zéolithes selon la présente invention sont également respectueuses de l'environnement.

D'autres objets, aspects, avantages, propriétés de la présente invention sont présentés dans la description détaillée et les exemples qui suivent.

Les zéolithes sont des aluminosilicates. Elles sont généralement définies par la formule 1 :

M[(AlO₂)x(SiO₂)], nH₂O

Ainsi généralement une zéolithe est formée de trois composants :
- le squelette alumino-silicate, plus particulièrement (AlO₂)x(SiO₂), en outre au moins une partie des atomes d'Al et/ou de Si peut être remplacée par un autre ou d'autres atome(s),
- M le cation ou l'ensemble de cations qui assure(nt) la neutralité électrique de la zéolithe, on parle également de « charge positive de surface, ce sont typiquement des alcalins notamment Na⁺ ou K⁺, ou éventuellement NH₄⁺ ;
- une phase adsorbée, généralement formée par de l'eau n(H₂O).

La zéolithe selon la présente invention se distingue par le fait qu'elle est à la fois dopée par au moins un cation d'un métal de transition et modifiée par au moins un agent, par conséquent la zéolithe selon la présente invention est une zéolithe de synthèse.

Par « dopée par un cation d'un métal de transition » au sens de la présente invention, on entend que la zéolithe a été soumise à un échange ionique, en particulier on entend qu'une partie des ions alcalins de surface M, initialement présents, sont échangés par des cations d'un ou plusieurs métal(ux) de transition.

Dans les zéolithes selon l'invention, seulement une partie des ions alcalins de surface est remplacée par des ions d'au moins un métal de transition. En effet chaque zéolithe présente une capacité d'échange (« ion-exchange capacity » en langue anglaise) qui va conditionner la quantité maximale d'ions qui pourront être échangés.

Le cation d'un métal de transition utilisé pour doper la zéolithe selon la présente invention est choisi dans le groupe formé par Cu⁺, Cu²⁺, Ag⁺, Zn²⁺, de manière préférée Cu⁺, Cu²⁺ et Zn²⁺, avantageusement Cu⁺et Cu²⁺ et de manière encore préférée Cu²⁺.

Comme déjà mentionné, dans les zéolithes selon l'invention, seulement une partie des ions alcalins de surface est remplacée par des ions d'au moins un métal de transition.

Avantageusement, le pourcentage de métal(ux) de transition dans la zéolithe, de préférence choisis parmi Cu, Ag, Zn, de manière préférée parmi Cu et Zn et de manière avantageuse Cu va de 0,001 à 20 %, de préférence de 1 à 15 %, et de manière encore préférée de 5 à 10 % en poids de métal(ux) par rapport au poids total de la zéolithe sous forme sèche.

Ladite « forme sèche » est obtenue en soumettant la zéolithe à un traitement thermique sous air à une température allant de 200°C à 500°C, de préférence allant de 350°C à 450°C.

Généralement ledit traitement thermique est effectué pendant une durée allant de 2 à 12 heures de préférence de 4 à 6 heures.

La forme sèche correspond aux composants {M[(AlO₂)x(SiO₂)]} de la formule 1.

Généralement la quantité d'argent dans la zéolithe va de 0,001 à 15% en poids par rapport au poids total de la zéolithe.

Généralement la quantité de cuivre dans la zéolithe va de 0,01 à 10% en poids par rapport au poids total de la zéolithe.

Généralement la quantité de zinc dans la zéolithe va de 0,01 à 10% en poids par rapport au poids total de la zéolithe.

De préférence, la zéolithe utilisée dans la présente invention est une zéolithe naturelle choisie parmi les formes clinoptilolite, chabazite, mordénite et heulandite, de préférence clinoptilolite et mordénite ; ou une zéolithe de synthèse choisie parmi les formes A, X, Y et mordénite, de préférence A, X, Y.

Selon un premier mode préféré, la surface spécifique B.E.T. de la zéolithe utilisée dans la présente invention est d'au moins 300 m²/g, de préférence d'au moins 500 m²/g ; et de manière encore préférée d'au moins 700 m²/g, ladite surface spécifique B.E.T. étant inférieure à 950 m²/g.

Selon un deuxième mode préféré, le rapport Si/Al est inférieur à 10, c'est-à-dire que, dans la formule (AlO₂)x(SiO₂) mentionnée ci-dessus, x est tel que 0<x<10.

Selon un troisième mode préféré, la surface spécifique B.E.T. de la zéolithe utilisée dans la présente invention est d'au moins 300 m2/g, de préférence d'au moins 500 m2/g ; et de manière encore préférée d'au moins 700 m2/g, la surface spécifique B.E.T. étant inférieure à 950 m²/g et le rapport Si/Al est inférieur à 10.

La zéolithe selon l'invention est en outre modifiée c'est-à-dire greffée et/ou imprégnée par au moins un agent choisi parmi les ammoniums quaternaires et les sels d'acides gras en C₈-C₂₀.

Sans vouloir être lié à une quelconque théorie, il semble que lesdits agents vont se positionner en surface de la zéolithe. Du fait de leur grande taille, les ions ammoniums quaternaires et acides gras n'entrent pas à proprement dit dans la structure de la zéolithe mais se lient *via* des liaisons covalentes, on parle alors de « greffage » ; ou non-covalentes, on parle alors « d'imprégnation ». Par exemple le greffage peut s'effectuer par réactions d'hydroxylation. Lesdits agents vont former une couche autour de ladite zéolithe qui va conduire à une modification de son état de surface conduisant à une zéolithe modifiée stable et permettant une bonne intégration, compatibilité avec l'environnement en particulier dans les milieux organiques. Les ammoniums quaternaires et les sels d'acides gras en C₈-C₂₀ peuvent ainsi présenter des propriétés texturantes.

Sans vouloir être lié à une quelconque théorie, il semble que la zéolithe selon l'invention se comporte comme un réservoir d'agents actifs qui, du fait de la présence de la couche d'ammoniums quaternaires et/ou de sels d'acides gras en C₈-C₂₀, sont très peu libérés, mais vont plutôt produire leur effet à distance par exemple *via* des micro-charges électriques.

Avantageusement, la zéolithe selon la présente invention est dopée par au moins un cation d'un métal de transition et modifiée par au moins un agent choisi parmi les ammoniums quaternaires.

Par « ammonium quaternaire », au sens de la présente invention, on entend un ion de formule -N(R₁R₂R₃R₄)⁺ dans laquelle les groupes R₁, R₂, R₃ et R₄, identiques ou différents, représentent des radicaux alkyles en C₁-C₂₀.

De manière préférée, les groupes R₁, R₂ et R₃, identiques ou différents, représentent des groupes alkyles en C₁-C₆, de préférence des groupes alkyles en C₁-C₄ et de manière encore préférée des groupes méthyles et R₄ représente un groupe alkyle en C₈-C₂₀.

Généralement le groupe R₄ est un radical alkyle issu d'un acide gras c'est-à-dire comprenant un nombre pair d'atomes de carbone allant de 8 à 20, et avantageusement un nombre d'atomes de carbone choisi dans le groupe formé 12, 14, 16, 18.

Avantageusement les groupes R₁, R₂ et R₃, identiques ou différents, représentent des groupes alkyles en C₁-C₆, de préférence des groupes alkyles en C₁-C₄ et de manière encore préférée des groupes méthyles et le groupe R₄ est un radical alkyle comprenant un nombre d'atomes de carbone choisi dans le groupe formé 12, 14, 16, 18.

De manière particulièrement préférée, l'ammonium quaternaire est l'hexadécyltriméthylammonium (HDTMA).

Généralement, la quantité en ammonium(s) quaternaire(s) va de 0,02 à 0,3 mmole, de préférence de 0,05 à 0,28 mmole et de manière préférée de 0,08 à 0,25 mmole par rapport au poids total de la zéolithe sous forme sèche.

Par « sels d'acides gras en C₈-C₂₀ », au sens de la présente invention, on entend un sel de sodium ou de potassium d'un acide gras en C₈-C₂₀, de préférence en C₁₂-C₂₀. De manière particulièrement préférée, le sel d'acide gras est le laurate de potassium ou le laurate de sodium.

Un procédé de préparation de la zéolithe selon l'invention comprend deux étapes principales, avantageusement effectuées dans l'ordre suivant : une étape visant à échanger au moins une partie des cations de métaux alcalins présents dans la zéolithe par des cations de métaux de transition et une étape d'introduction d'au moins un agent choisi parmi les ammoniums quaternaires et les sels d'acides gras en C₈-C₂₀.

La première étape de préparation de la zéolithe comprend la mise en contact de ladite zéolithe avec au moins une solution comprenant au moins un cation d'un métal de transition, puis la récupération de la zéolithe échangée, généralement après des étapes de filtration, lavage et séchage.

Avantageusement, l'étape de mise en contact de la zéolithe avec au moins une solution comprenant au moins un cation d'un métal de transition a une durée allant de 30 minutes à 8 heures

La zéolithe peut être échangée par une ou plusieurs espèces de cation de métaux de transition, ainsi elle peut être échangée par des ions par une seule espèce de cation : Cu⁺ ou Cu²⁺ ou Ag⁺ ou Zn²⁺, par deux espèces de cations Cu⁺ et Cu²⁺, Cu⁺ et Ag⁺, Cu⁺ et Zn²⁺, Cu²⁺ et Ag⁺, Cu²⁺ et Zn²⁺ ou Ag⁺ et Zn²⁺, ou encore par trois ou quatre espèces de cations.

De préférence, la zéolithe est échangée par une ou deux espèces de cations de métaux de transition.

De préférence, le cation de métal de transition est introduit au moyen d'une solution de sels de métal(ux) de transition de type nitrate, sulfate, perchlorate, acétate : notamment pour l'argent sont utilisées des solutions de nitrate d'argent, de sulfate d'argent, de perchlorate d'argent ou d'acétate d'argent ; pour le cuivre sont utilisées des solutions de nitrate de cuivre (II), de sulfate de cuivre, de perchlorate de cuivre ou d'acétate de cuivre ; pour le zinc sont utilisées des solutions de nitrate de zinc (II), de sulfate de zinc, d'acétate de zinc ou de thiocyanate de zinc.

Avantageusement, la solution de sels de métal(ux) de transition est mise en contact avec la zéolithe sous agitation pendant une durée allant de 30 minutes à 8 heures, de préférence de 2 à 6 heures. La suspension obtenue est généralement filtrée, lavée et séchée.

En général, les solutions d'ions de métaux de transition sont telles que la quantité des ions échangés est inférieure à la capacité d'échange de la zéolithe, généralement inférieure à 90% de la capacité d'échange de la zéolithe.

La quantité d'ions échangés peut être contrôlée en ajustant la concentration de chaque espèce/sel de métal de transition. A titre d'exemple, dans le cas d'une zéolithe échangée au cuivre, une solution de sulfate de cuivre est généralement utilisée.

En outre, la concentration de la solution en cuivre ne doit pas être trop élevée afin d'éviter la formation d'un précipité dans la phase solide de la zéolithe qui conduirait à une baisse de la porosité et par conséquent une diminution de la surface spécifique. Ainsi afin d'éviter la précipitation des ions cuivre en excès dans la phase solide de la zéolithe, il est préférable de maintenir la concentration de la solution d'ions cuivre à une concentration maximale de 1 mol/l (1M). La quantité de métal(ux) de transition dans la zéolithe peut atteindre 20% en poids par rapport au poids total de la zéolithe, bien entendu la zéolithe considérée est une zéolithe anhydre.

Généralement, les solutions de sels de métal(ux) de transition utilisées sont telles que la concentration en chaque sel de métal de transition va de 0,1 à 2 mol/l.

Il relève des compétences de l'homme du métier de choisir la concentration de la solution utilisée en fonction de la quantité de métal de transition souhaitée dans la zéolithe.

Généralement l'étape de mise en contact de la zéolithe dopée avec une solution comprenant au moins un ammonium quaternaire a une durée allant de 12 à 48 heures.

L'ammonium quaternaire est introduit au moyen d'une solution d'halogénure(s) par exemple de bromure ou de chlorure d'ammoniums quaternaires ou encore au moyen d'hydroxyde d'ammoniums quaternaires.

La solution d'halogénures d'ammoniums quaternaires est généralement mise en contact avec la zéolithe échangée sous agitation pendant une durée allant de 12 à 48 heures, de préférence de 18 à 30 heures.

Puis la suspension est filtrée et séchée. Avant utilisation la zéolithe selon l'invention est en général séchée, à pression atmosphérique ou à pression réduite, généralement à une température allant de 100 à 300°C, de préférence allant de 100 à 200°C sous pression réduite.

Selon une première variante, la zéolithe selon l'invention se présente avantageusement sous la forme d'une poudre de granulométrie moyenne allant de 1 10⁻⁶m à 50 10⁻⁶m, de préférence de 5 10⁻⁶m à 25 10⁻⁶m.

Selon une deuxième variante, la zéolithe selon l'invention se présente sous la forme d'une suspension aqueuse ou organique, de préférence aqueuse, de concentration allant de 15 à 50 %, de préférence de 20 à 30% en poids de matière sèche.

La présente invention vise plus particulièrement des compositions, notamment de peintures comprenant au moins une zéolithe selon la présente invention. Plus particulièrement sont visées les compositions comprenant au moins un (co)polymère de polydiméthylsiloxane et les compositions comprenant au moins une résine acrylique.

Selon un autre aspect la présente invention vise une composition comprenant au moins une zéolithe selon la présente invention et un agent choisi parmi les (co)polymères de polydiméthylsiloxane, les résines acryliques, les colorants, les pigments, les liants, les solvants organiques, les charges.

La présente invention vise encore l'utilisation d'une zéolithe selon l'invention ou préparée selon le procédé selon l'invention ou encore l'utilisation de la composition selon l'invention comme agent de résistance à la formation de biofilms.

Plus particulièrement, la zéolithe selon l'invention est avantageusement utilisée pour limiter voire empêcher la formation de salissures d'un objet placé en eau douce ou en mer.

Les différents stades de la progression de la salissure marine sur un support correspondent à la colonisation dudit support par des groupes d'organismes vivants différents c'est-à-dire différentes catégories de salissures. Ainsi, on peut définir ladite progression de la salissure marine par la colonisation du support successivement par les groupes suivants : le biofilm, les microalgues, les algues de type « cheveux » les algues de type « salade », les espèces non encroûtantes puis les espèces encroûtantes.

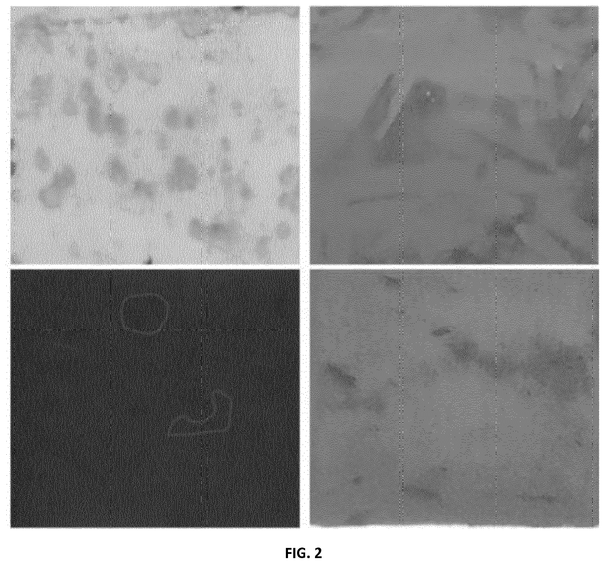

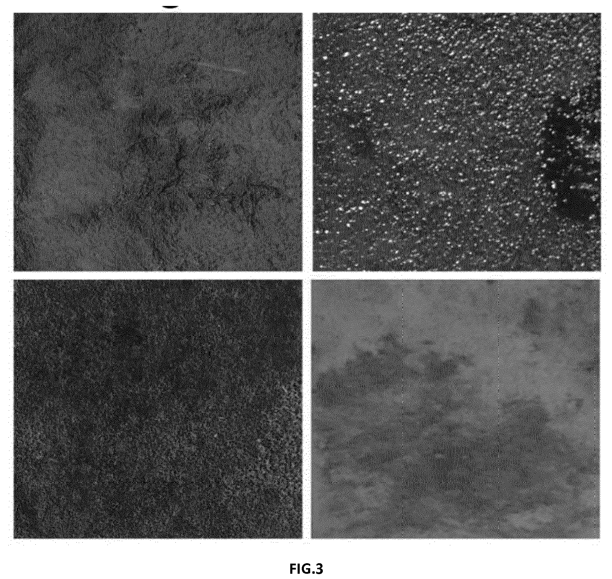

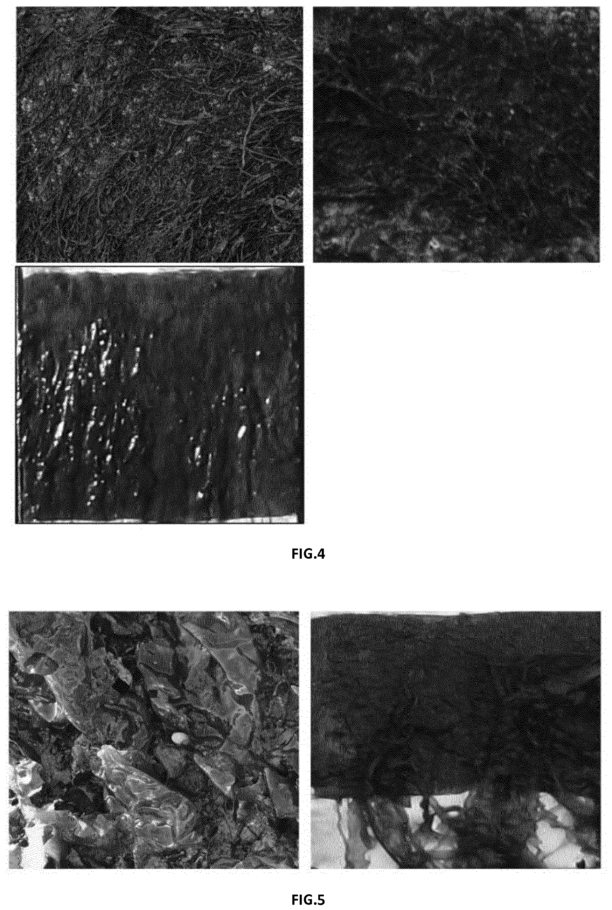

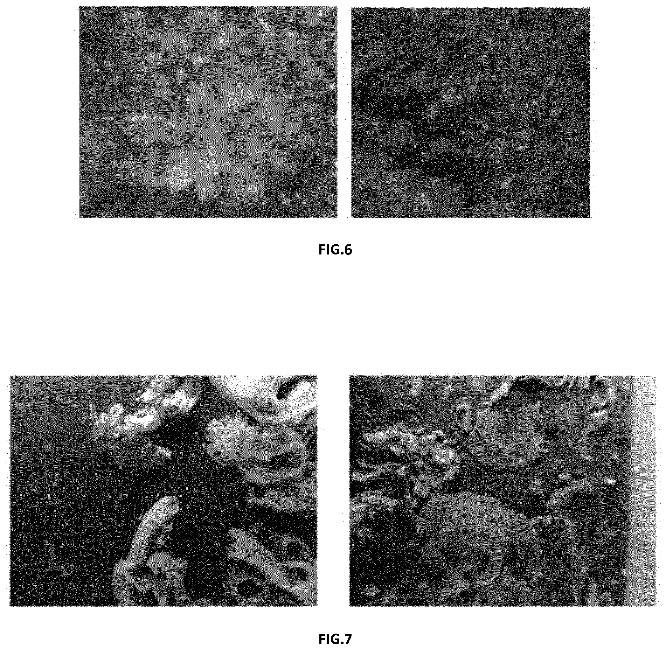

En figures 2-7 sont présentées des exemples de salissures en fonction de la catégorie à laquelle elles appartiennent.
La figure 2 présente 4 photographies d'exemples de biofilms ;
la figure 3 présente 4 photographies d'exemples de microalgues ;
la figure 4 présente 3 photographies d'exemples d'algues de type filamentaires ou « cheveux » ;
la figure 5 présente 2 photographies d'exemples d'algues de type « salade » ;
la figure 6 présente 2 photographies d'exemples d'espèces non encroûtantes et
la figure 7 présente 2 photographies d'exemples d'espèces encroûtantes.

Les exemples qui suivent illustrent l'invention sans en limiter la portée.

### Exemples

### A. Préparation des zéolithes modifiées

Les exemples 1 à 4 correspondent à la fabrication de zéolithes conformes à l'invention alors que l'exemple 5 correspond à la fabrication d'une zéolithe comparative, non conforme à l'invention.

### Exemple 1 : Fabrication d'une zéolithe modifiée par un tensio-actif- Cu 5%

### Echange au cuivre

On prépare 300 ml d'une solution de sulfate de cuivre 0.31 M à 60°C.

On y ajoute, sous agitation, 100g de zéolithe de type clinoptilolite présentant un ratio Si/Al de 4 à 5.

On maintient la suspension sous agitation durant 3 heures à 60°C.

### Filtration et lavage

On filtre la suspension sous vide à l'aide d'une trompe à eau, sur entonnoir à plaque en verre fritté de porosité n°4.

Après séparation des eaux-mères, on lave consécutivement deux fois le solide obtenu sur le filtre avec 400 ml d'eau déminéralisée.

### Séchage

Le solide est séché durant une nuit en étuve ventilée à 80°C puis traité thermiquement pendant une nuit sous azote à 300°C.

### Greffage du tensio-actif (HDTMA-Br)

On prépare 240 ml d'une solution de HDTMA-Br 0.1M à 40°C.

On y ajoute sous agitation 60 g du solide obtenu à l'étape précédente.

On maintient la suspension sous agitation durant 24 heures à 40°C.

### Filtration

On filtre la suspension sous vide à l'aide d'une trompe à eau, sur entonnoir à plaque en verre fritté de porosité n°4.

### Séchage

La zéolithe modifiée obtenue après filtration est séchée pendant une nuit en étuve ventilée à 100°C.

### Exemple 2 : Fabrication d'une zéolithe modifiée par un tensio-actif Cu 10%

### Echange au cuivre

On prépare 600 ml d'une solution de sulfate de cuivre 1 M à 80°C.

On y ajoute 100g de zéolithe de type clinoptilolite présentant un ratio Si/Al de 4 à 5.

On maintient la suspension sous agitation durant 5 heures à 80°C.

### Filtration et lavage

On filtre la suspension sous vide à l'aide d'une trompe à eau, sur entonnoir à plaque en verre fritté de porosité n°4.

Après séparation des eaux-mères, on lave consécutivement trois fois le solide obtenu sur le filtre avec 400 ml d'eau déminéralisée.

### Séchage

Le solide est séché durant une nuit en étuve ventilée à 80°C puis traité thermiquement pendant une nuit sous azote à 300°C.

### Greffage de l'ammonium quaternaire (HDTMA-Br)

On prépare 240 ml d'une solution de HDTMA-Br 0.1M à 40°C.

On y ajoute sous agitation 60 g du solide obtenu à l'étape précédente.

On maintient la suspension sous agitation durant 24 heures à 40°C.

### Filtration

On filtre la suspension sous vide à l'aide d'une trompe à eau, sur entonnoir à plaque en verre fritté de porosité n°4.

### Séchage

La zéolithe modifiée obtenue après filtration est séchée pendant une nuit en étuve ventilée à 100°C.

### Exemple 3 : Fabrication d'une zéolithe modifiée par un tensio-actif (x2) - Cu 5%

### Echange au cuivre

On prépare 300 ml d'une solution de sulfate de cuivre 0.31 M à 60°C.

On y ajoute, sous agitation, 100g de zéolithe de type clinoptilolite présentant un ratio Si/Al de 4 à 5.

On maintient la suspension sous agitation durant 3 heures à 60°C.

### Filtration et lavage

On filtre la suspension sous vide à l'aide d'une trompe à eau, sur entonnoir à plaque en verre fritté de porosité n°4.

Après séparation des eaux-mères, on lave consécutivement deux fois le solide obtenu sur le filtre avec 400 ml d'eau déminéralisée.

### Séchage

Le solide est séché durant une nuit en étuve ventilée à 80°C puis traité thermiquement pendant une nuit sous azote à 300°C.

### Greffage de l'ammonium quaternaire (HDTMA-Br)

On prépare 240 ml d'une solution de HDTMA-Br 0.2M à 40°C.

On y ajoute sous agitation 60 g du solide obtenu à l'étape précédente.

On maintient la suspension sous agitation durant 24 heures à 40°C.

### Filtration

On filtre la suspension sous vide à l'aide d'une trompe à eau, sur entonnoir à plaque en verre fritté de porosité n°4.

### Séchage

La zéolithe modifiée obtenue après filtration est séchée pendant une nuit en étuve ventilée à 100°C.

### Exemple 4 : Fabrication d'une zéolithe modifiée par un tensio-actif (/2) - Cu 5%

### Echange au cuivre

On prépare 300 ml d'une solution de sulfate de cuivre 0.31 M à 60°C.

On y ajoute, sous agitation, 100g de zéolithe de type clinoptilolite présentant un ratio Si/Al de 4 à 5.

On maintient la suspension sous agitation durant 3 heures à 60°C.

### Filtration et lavage

On filtre la suspension sous vide à l'aide d'une trompe à eau, sur entonnoir à plaque en verre fritté de porosité n°4.

Après séparation des eaux-mères, on lave consécutivement deux fois le solide obtenu sur le filtre avec 400 ml d'eau déminéralisée.

### Séchage

Le solide est séché durant une nuit en étuve ventilée à 80°C puis traité thermiquement pendant une nuit sous azote à 300°C.

### Greffage de l'ammonium quaternaire (HDTMA-Br)

On prépare 240 ml d'une solution de HDTMA-Br 0.05M à 40°C.

On y ajoute sous agitation 60 g du solide obtenu à l'étape précédente.

On maintient la suspension sous agitation durant 24 heures à 40°C.

### Filtration

On filtre la suspension sous vide à l'aide d'une trompe à eau, sur entonnoir à plaque en verre fritté de porosité n°4.

### Séchage

La zéolithe modifiée obtenue après filtration est séchée pendant une nuit en étuve ventilée à 100°C.

### Exemple 5 : Fabrication d'une zéolithe modifiée par un tensio-actif

### Traitement sous azote

100g de zéolithe de type clinoptilolite présentant un ratio Si/Al de 4 à 5 sont traités thermiquement pendant une nuit sous azote à 300°C.

### Greffage de l'ammonium quaternaire (HDTMA-Br)

On prépare 240 ml d'une solution de HDTMA-Br 0.1M à 40°C.

On y ajoute sous agitation 60 g de la zéolithe obtenue à l'étape précédente.

On maintient la suspension sous agitation durant 24 heures à 40°C.

### Filtration

On filtre la suspension sous vide à l'aide d'une trompe à eau, sur entonnoir à plaque en verre fritté de porosité n°4.

### Séchage

La zéolithe modifiée obtenue après filtration est séchée pendant une nuit en étuve ventilée à 100°C.

### Caractéristiques des zéolithes

Dans le tableau 1 sont reportées les principales caractéristiques des zéolithes préparées dans les exemples 1 à 5.

La teneur en cuivre des zéolithes est mesurée par spectrométrie à Plasma à couplage Inductif ou « ICP » (« Inductively Coupled Plasma » en langue anglaise) et reportée dans le tableau 1. Cette méthode physique d'analyse chimique permet de doser la quasi-totalité des éléments simultanément. Elle permet d'obtenir les teneurs en chaque métal de transition en % en poids par rapport au poids total de la zéolithe sous forme sèche.

La teneur en ammonium quaternaire des zéolithes est déterminée par analyse thermogravimétrique au moyen d'un appareil mixte ATD-ATG.

L'appareil utilisé est une thermo-balance de marque SETARAM modèle TG/DTA 92.

La méthode utilisée permet de mesurer la différence de perte de masse entre une zéolithe non modifiée par des ions ammoniums quaternaires et la même zéolithe modifiée par des ions ammoniums quaternaires.

Pour chaque zéolithe (modifiée par des ions ammoniums quaternaires et non modifiée), on effectue une mesure de la perte de masse après calcination à 560 °C sous air, puis on calcule la différence des pertes de masses de deux zéolithes.

A titre d'exemple, la perte de masse de la zéolithe de l'exemple 1 est de 13,25 % et la perte de masse de la même zéolithe non modifiée par des ions ammoniums quaternaires est de 8,67 %. La quantité des ions ammoniums quaternaires est donc de 13, 25 - 8,67 = 4, 58.

**Tableau 1**

| | Métal de transition | Teneur en métal de transition | Nature de la zéolithe | Type d'ammonium quaternaire | Teneur en ammonium quater. | |
|---|---|---|---|---|---|---|
| | | | | | % massique | mmol /g |
| Ex.1 | Cu | 4,8 | Clinoptilolite | HDTMA-Br | 4,6% | 0,126 |
| Ex.2 | Cu | 8,8 | Clinoptilolite | HDTMA-Br | 3,5% | 0,096 |
| Ex.3 | Cu | 4,8 | Clinoptilolite | HDTMA-Br | 8,4% | 0,230 |
| Ex.4 | Cu | 4,7 | Clinoptilolite | HDTMA-Br | 4,7% | 0,129 |
| Ex.5 comp. | - | 0 | Clinoptilolite | HDTMA-Br | 5,4% | 0,148 |

### B. Préparation des formulations

Cinq formulations, nommées formulation 1 (F.1) à formulation 5 (F.5) ont été préparées en mélangeant 5% en poids de chacune des zéolithes des exemples 1 à 5 ci-dessus avec 95% en poids un élastomère de silicone (polydiméthylesiloxane). Pour préparer chacune des formulations F1 à F5, 5% de zéolithe, respectivement des exemples 1 à 5, ont été mélangés avec le prépolymère vendu sous la marque Sylgard 184® à l'aide d'un mélangeur Ultra Turrax ®, puis l'agent réticulant Sylgard 184® est ensuite ajouté au mélange à l'aide d'une spatule selon un ratio pondéral prépolymère/ agent réticulant égal à 10/1.

Chacune des formulations F1 à F5 a été appliquée sur une plaque de polycarbonate de dimensions 150 x 150 mm - respectivement plaques P1 à P5 -. Les plaques ont ensuite été séchées pendant une heure dans une étuve à 50°C en les retournant au bout d'une demi-heure.

### Méthode de mesure des propriétés antisalissures et résultats

Les plaques P1 à P5 ont été fixées sur un support et immergées dans la mer au niveau d'un ponton d'un port de plaisance.

Comme déjà mentionné, les différents stades de la progression de la salissure marine sur un support correspondent à la colonisation dudit support par différents types de salissures.

Les propriétés antisalissures des formulations F1 à F5 ont été déterminées en prenant régulièrement des photographies des plaques P1 à P5 et en mesurant le facteur d'efficacité N de la formulation testée.

Le facteur d'efficacité N correspond à la somme des facteurs d'efficacité pour chaque type de salissure. Ainsi pour chaque type de salissure, le facteur d'efficacité N correspond au produit du facteur G présenté dans le tableau 2 et du facteur I correspondant au pourcentage de recouvrement.

Le facteur de gravité G, associé à chaque catégorie de salissures est présenté dans le tableau 2.

**Tableau 2**

| Catégorie de salissure | biofilm | Microalgues | Algues (cheveux -stade 1) | Algues (salade - stade 2) | Espèces non encroûtan tes | Espèces encroûtan tes |
|---|---|---|---|---|---|---|
| Facteur de gravité G | 1 | 2 | 4 | 6 | 6 | 8 |

Le facteur intensité I correspondant à la surface recouverte pour chaque catégorie de salissures est présenté dans le tableau 3.

**Tableau 3**

| Pourcentage de l'aire x du support recouvert | 0 | 0<x≤10 | 10<x≤20 | 20<x≤40 | 40<x≤60 | 60<x≤100 |
|---|---|---|---|---|---|---|
| Facteur d'intensité I | 0 | 1 | 2 | 3 | 4 | 5 |

### Résultats

| | Teneur en PDMS (% en poids) | I | G | Facteur N à 1,5 mois | Etat de la plaque |
|---|---|---|---|---|---|
| Ex.1 | 95 | 3 | 1 | 5 | Voir P1 sur la figure 1 |
| | | 1 | 2 | | |
| Ex.2 | 95 | 1 | 1 | 9 | Voir P2 sur la figure 1 |
| | | 4 | 2 | | |
| Ex.3 | 95 | 3 | 1 | 3 | Voir P3 sur la figure 1 |
| Ex.4 | 95 | 2 | 1 | 4 | Voir P4 sur la figure 1 |
| | | 1 | 2 | | |
| Ex.5 (comparatif) | 95 | 4 | 1 | 16 | Voir P5 sur la figure 1 |
| | | 4 | 2 | | |
| | | 1 | 4 | | |

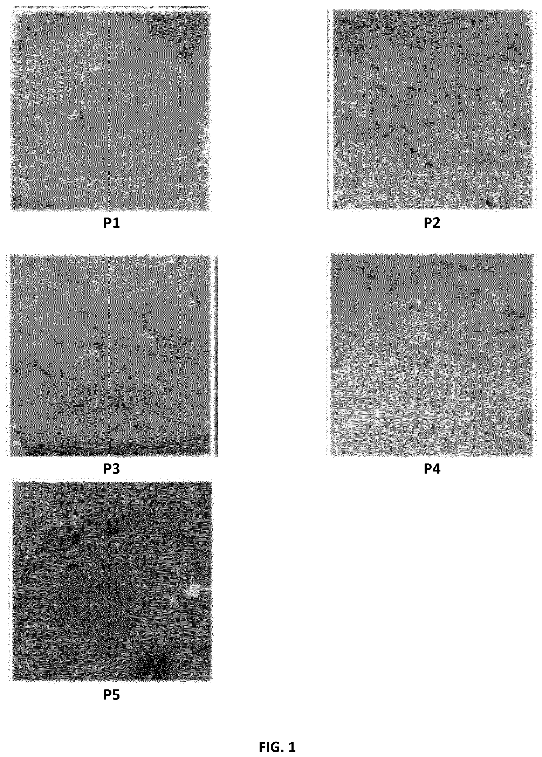

Sur la figure 1, il apparait que :
- sur la plaque P1 se sont développés du biofilm (G=1) sur une aire allant de 20 à 40% du support (I =3) ainsi que des microalgues (G=2) sur une aire inférieure à 10% du support (I=1) ;
- sur la plaque P2 se sont développés du biofilm (G=1) sur une aire inférieure à 10% du support (I=1) ainsi que des microalgues (G=2) sur une aire allant de 40 à 60% du support (I=4) ;
- sur la plaque P3 s'est développé du biofilm (G=1) sur une aire allant de 20 à 40% du support (I =3);
- sur la plaque P4 se sont développés du biofilm (G=1) sur une aire allant de 10 à 20% du support (I =2) ainsi que des microalgues (G=2) sur une aire inférieure à 10% du support (I=1) ;
- sur la plaque P5 se sont développés du biofilm (G=1) sur une aire allant de 40 à 60% du support (I =4), des microalgues (G=2) sur une aire allant de 40 à 60% du support (I =4) et des algues au stade 1 (G=4) sur une aire inférieure à 10% du support (I=1).

Il ressort des résultats ci-dessus que le développement des salissures marines sur les plaques P1 à P4 traitées au moyen des compositions F1 à F4 conformes à l'invention est moins important que celui observé sur la plaque P5 traitée avec la composition comparative F5.

En particulier, sur les plaques P1 à P4 recouvertes respectivement des compositions F1 à F4 conformes à l'invention a été observé un développement de biofilm et parfois de microalgues mais en une quantité significativement plus faible que le développement du biofilm et des microalgues sur la plaque P5 recouverte de F5. De plus aucune présence d'algues n'a été notée sur les plaques recouvertes par les compositions conformes à l'invention.

Les compositions de peintures selon la présente invention permettent de limiter la formation de biofilms et de biosalissures.

## Revendications

1. Zéolithe de type aluminosilicate dopée, c'est-à-dire soumise à un échange ionique, par au moins un cation d'un métal de transition choisi dans le groupe formé par Cu⁺, Cu²⁺, Ag⁺, Zn²⁺, et modifiée en surface par au moins un agent choisi parmi les ammoniums quaternaires de formule -N(R₁R₂R₃R₄)⁺ dans laquelle les groupes R₁, R₂, R₃ et R₄, identiques ou différents, représentent des groupes alkyles en C₁-C₂₀ et les sels de sodium ou de potassium d'acides gras en C₈-C₂₀.

2. Zéolithe selon la revendication 1 dans laquelle l'agent est un ammonium quaternaire de formule -N(R₁R₂R₃R₄)⁺ dans laquelle les groupes R₁, R₂ et R₃, identiques ou différents, représentent des groupes alkyles en C₁-C₆, de préférence des groupes alkyles en C₁-C₄ et de manière encore préférée des groupes méthyles et R₄ représente un groupe alkyle en C₈-C₂₀, de préférence l'ammonium quaternaire est l'hexadécyltriméthylammonium .

3. Zéolithe selon l'une quelconque des revendications 1 ou 2 dans laquelle la quantité en ammonium(s) quaternaire(s) va de 0,02 à 0,3 mmole, de préférence de 0,05 à 0,28 mmole et de manière préférée de 0,08 à 0,25 mmole par rapport au poids de la zéolithe sous forme sèche.

4. Zéolithe selon l'une quelconque des revendications 1 à 3 dans laquelle le cation d'un métal de transition est choisi dans le groupe formé par Cu⁺, Cu²⁺ et Zn²⁺ et de manière préférée Cu²⁺,

5. Zéolithe selon l'une quelconque des revendications 1 à 4 dans laquelle la quantité en poids de métal(ux) de transition va de 0,001 à 20 %, de préférence de 1 à 15 % et de manière préférée de 5 à 10 % en poids de métal(ux) par rapport au poids total de la zéolithe sous forme sèche.

6. Zéolithe selon l'une quelconque des revendications 1 à 5 dans laquelle la zéolithe est une zéolithe naturelle choisie parmi les formes clinoptilolite, chabazite, mordénite et heulandite, de préférence clinoptilolite et mordénite.

7. Zéolithe selon l'une quelconque des revendications 1 à 5 dans laquelle la zéolithe est une zéolithe de synthèse choisie parmi les formes A, X, Y, et mordénite, de préférence A, X, Y.

8. Zéolithe selon l'une quelconque des revendications 1 à 7 sous la forme de poudre de granulométrie moyenne allant de 1 10⁻⁶m à 50 10⁻⁶m, de préférence de 5 10⁻⁶m à 25 10⁻⁶m.

9. Zéolithe selon l'une quelconque des revendications 1 à 7 sous la forme d'une suspension aqueuse ou organique de concentration allant de 15 à 50 %, de préférence de 20 à 30% en poids de matière sèche.

10. Procédé de préparation de la zéolithe selon l'une quelconque des revendications 1 à 7 ou 9 **caractérisée en ce qu'**il comprend les étapes suivantes, dans cet ordre :
- disposer d'une zéolithe de type aluminosilicate,
- mettre ladite zéolithe en contact avec au moins une solution comprenant au moins un cation d'un métal de transition choisi dans le groupe formé par Cu⁺, Cu²⁺, Ag⁺, Zn²⁺,
- récupérer la zéolithe dopée, c'est-à-dire soumise à un échange ionique , par le cation obtenue,
- mettre ladite zéolithe dopée en contact avec une solution comprenant au moins un agent choisi parmi les ammoniums quaternaires de formule -N(R₁R₂R₃R₄)⁺ dans laquelle les groupes R₁, R₂, R₃ et R₄, identiques ou différents, représentent des groupes alkyles en C₁-C₂₀ et les sels de sodium ou de potassium d'acides gras en C₈-C₂₀,
- récupérer la zéolithe dopée et modifiée en surface obtenue.

11. Procédé selon la revendication précédente de préparation de la zéolithe selon la revendication 8, dans lequel la zéolithe dopée et modifiée en surface est filtrée et séchée.

12. Procédé selon la revendication 10 ou 11 dans lequel l'étape de mise en contact de la zéolithe avec au moins une solution comprenant au moins un cation d'un métal de transition a une durée allant de 30 minutes à 8 heures.

13. Procédé selon la revendication 11 ou 12 dans lequel l'étape de mise en contact de la zéolithe dopée avec une solution comprenant au moins un ammonium quaternaire a une durée allant de 12 à 48 heures.

14. Composition comprenant au moins une zéolithe selon l'une quelconque des revendications 1 à 9 ou préparée selon le procédé suivant l'une quelconque des revendications 10 à 13 et un agent choisi parmi les (co)polymère de polydiméthylsiloxane, les résines acryliques, les colorants, les pigments, les liants, les solvants organiques, les charges.

15. Utilisation de la zéolithe selon l'une quelconque des revendications 1 à 9 ou préparée selon le procédé suivant l'une quelconque des revendications 10 à 13 ou de la composition selon la revendication 14 comme agent de résistance à la formation de biofilms.

## Patentansprüche

1. Zeolith vom Typ Alumosilikat, der dotiert ist, d.h. mit mindestens einem Kation eines Übergangsmetalls, das aus der Gruppe Cu⁺, Cu²⁺, Ag⁺, Zn²⁺ ausgewählt wird, einem lonenaustausch unterzogen wurde, und an der Oberfläche durch mindestens ein Mittel modifiziert ist, das ausgewählt wird aus quartären Ammoniumverbindungen der Formel-N(R₁R₂R₃R₄)+, in der die identischen oder unterschiedlichen Gruppen R₁, R₂, R₃ und R₄ C₁-C₂₀-Alkylgruppen und die Natrium- oder Kaliumsalze C₈-C₂₀-Fettsäuren sind.

2. Zeolith nach Anspruch 1, in dem das Mittel ein quartäres Ammonium der Formel-N(R₁R₂R₃R₄)⁺ ist, in dem die identischen oder unterschiedlichen Gruppen R₁, R₂ und R₃, C₁-C₆-Alkylgruppen, bevorzugt C₁-C₄-Alkylgruppen und insbesondere bevorzugt Methylgruppen sind und R₄ eine C₈-C₂₀-Alkylgruppe ist, wobei das quartäre Ammonium bevorzugt Hexadecyltrimethylammonium ist.

3. Zeolith nach einem der Ansprüche 1 oder 2, in dem die Menge an quartärem Ammonium 0,02 bis 0,3 mmol, bevorzugt 0,05 bis 0,28 mmol und insbesondere bevorzugt 0,08 bis 0,25 mmol, bezogen auf das Gewicht des Zeoliths in trockener Form, beträgt.

4. Zeolith nach einem der Ansprüche 1 bis 3, in dem das Kation eines Übergangsmetalls ausgewählt wird aus der Gruppe Cu⁺, Cu²⁺ und Zn²⁺ und bevorzugt Cu²⁺ ist.

5. Zeolith nach einem der Ansprüche 1 bis 4, in dem die Gewichtsmenge an Übergangsmetall(en) 0,001 bis 20 %, bevorzugt 1 bis 15 % und insbesondere bevorzugt 5 bis 10 % bezogen auf das Gesamtgewicht des Zeoliths in trockener Form beträgt.

6. Zeolith nach einem der Ansprüche 1 bis 5, in dem der Zeolith ein natürlicher Zeolith ist, der aus den Formen Klinoptilolith, Chabazit, Mordenit und Heulandit, bevorzugt aber aus den Formen Klinoptilolith und Mordenit ausgewählt wird.

7. Zeolith nach einem der Ansprüche 1 bis 5, in dem der Zeolith ein synthetischer Zeolith ist, der aus den Formen A, X, Y und Mordenit, bevorzugt aber aus den Formen A, X, Y ausgewählt wird.

8. Zeolith nach einem der Ansprüche 1 bis 7 in Form eines Pulvers mit einer mittleren Korngröße von 1 10⁻⁶m bis 50 10⁻⁶m, bevorzugt aber von 5 10⁻⁶m bis 25 10⁻⁶m.

9. Zeolith nach einem der Ansprüche 1 bis 7 in Form einer wässrigen oder organischen Suspension mit einer Konzentration von 15 bis 50 %, bevorzugt aber von 20 bis 30 % Massenanteil an der Trockensubstanz.

10. Verfahren zur Herstellung des Zeoliths nach einem der Ansprüche 1 bis 7 oder 9, **dadurch gekennzeichnet, dass** es die nachstehende Schritte in der genannten Reihenfolge umfasst:
- einen Zeolith vom Typ Aluminosilikat anordnen,
- den Zeolith mit mindestens einer Lösung in Kontakt bringen, wobei diese mindestens ein Kation eines Übergangsmetalls umfasst, das aus der Gruppe Cu⁺, Cu²⁺, Ag⁺, Zn²⁺ ausgewählt wird,
- den durch lonenaustausch mit dem Kation dotierten Zeolith entnehmen,
- den dotierten Zeolith mit einer Lösung in Kontakt bringen, die mindestens ein Mittel umfasst, das ausgewählt wurde aus quartären Ammoniumverbindungen der Formel-N(R₁R₂R₃R₄)⁺, in der die identischen oder unterschiedlichen Gruppen R₁, R₂, R₃ und R₄ C₁-C₂₀-Alkylgruppen und die Natrium- oder Kaliumsalze C₈-C₂₀-Fettsäuren sind,
- den erhaltenen dotierten und oberflächenmodifizierten Zeolith entnehmen.

11. Verfahren nach dem vorhergehenden Anspruch zur Herstellung des Zeoliths nach Anspruch 8, in dem der dotierte und oberflächenmodifizierte Zeolith gefiltert und getrocknet wird.

12. Verfahren nach Anspruch 10 oder 11, in dem der Schritt des Inkontaktbringens des Zeoliths mit mindestens einer Lösung, die mindestens ein Kation eines Übergangsmetalls umfasst, 30 Minuten bis 8 Stunden dauert.

13. Verfahren nach Anspruch 11 oder 12, in dem der Schritt des Inkontaktbringens des dotierten Zeoliths mit einer Lösung, die mindestens ein quartäres Ammonium umfasst, 12 bis 48 Stunden dauert.

14. Zusammensetzung, die mindestens einen Zeolith nach einem der Ansprüche 1 bis 9 umfasst oder nach dem Verfahren einer der Ansprüche 10 bis 13 hergestellt wurde, sowie ein Mittel, das aus Polydimethylsiloxan(co)polymer, Acrylharzen, Farbstoffen, Pigmenten, Bindemitteln, organischen Lösungsmitteln und Füllstoffen ausgewählt wird.

15. Verwendung des Zeoliths nach einem der Ansprüche 1 bis 9, bzw. der nach dem Verfahren einer der Ansprüche 10 bis 13 hergestellt oder nach Anspruch 14 zusammengesetzt wurde, als biofilmresistentes Mittel.

## Claims

1. Zeolite of the doped aluminosilicate type, that is undergoing ion exchange, by at least one cation of a transition metal selected from the group formed by Cu⁺, Cu²⁺, Ag⁺, Zn²⁺, and surface modified by at least one agent selected from the quaternary ammoniums having the formula -N(R₁R₂R₃R₄)⁺ in which the groups R₁, R₂, R₃ and R₄, identical or different, represent alkyl groups in C₁-C₂₀ and the sodium or potassium salts of fatty acids in C₈-C₂₀.

2. Zeolite according to claim 1, wherein the agent is a quaternary ammonium having the formula -N(R₁R₂R₃R₄)⁺ in which the groups R₁, R₂ and R₃, identical or different, represent alkyl groups in C₁-C₆, preferably alkyl groups in C₁-C₄ and still more preferably methyl groups and R₄ represents an alkyl group in C₈-C₂₀ and preferably the quaternary ammonium is hexadecyltrimethylammonium.

3. Zeolite according to either of claims 1 or 2, in which the amount of quaternary ammonium(s) ranges from 0.02 to 0.3 mmol, preferably from 0.05 to 0.28 mmol and more preferably from 0.08 to 0.25 mmol in relation to the weight of the zeolite in dry form.

4. Zeolite according to any one of clams 1 to 3, wherein the cation of a transition metal is selected from among the group formed by Cu⁺, Cu²⁺ and Zn²⁺, and preferably Cu²⁺.

5. Zeolite according to any one of claims 1 to 4, wherein the quantity in weight of transition metal(s) ranges from 0.001 to 20%, preferably from 1 to 15% and preferably from 5 to 10% in weight of metal(s) in relation to the total weight of the zeolite in dry form.

6. Zeolite according to any one of claims 1 to 5, wherein the zeolite is a natural zeolite selected from the clinoptilolite, chabazite, mordenite and heulandite forms, preferably the clinoptilolite and mordenite forms.

7. Zeolite according to any one of claims 1 to 5, wherein the zeolite is a synthetic zeolite selected from the A, X, Y and mordenite forms, preferably the A, X, Y forms.

8. Zeolite according to any one of claims 1 to 7, in the form of a powder with a mean particle size ranging from 110⁻⁶m to 50 10⁻⁶m, preferably from 5 10⁻⁶m to 25 10⁻⁶m.

9. Zeolite according to any one of claims 1 to 7, in the form of an aqueous or organic suspension with a concentration ranging from 15 to 50%, preferably from 20 to 30% in weight of dry matter.

10. Process of preparing zeolite according to any one of claims 1 to 7 or 9, **characterised in that** it comprises the following stages, **in that** order:
- having aluminosilicate-type zeolite,
- placing said zeolite in contact with at least one solution comprising at least one cation of a transition metal selected from the group formed by Cu⁺, Cu²⁺, Ag⁺, Zn²⁺,
- recovering the doped zeolite, that is undergoing ion exchange, by the cation obtained,
- placing said doped zeolite in contact with a solution comprising at least one agent selected from the quaternary ammoniums having the formula -N(R₁R₂R₃R₄)⁺ in which the groups R₁, R₂, R₃ et R₄, identical or different, represent alkyl groups in C₁-C_{20.}and the sodium or potassium salts of fatty acids in C₈-C₂₀,
- recovering the doped and surface modified zeolite obtained.

11. Process according to the preceding claim for preparing zeolite according to claim 8, wherein the doped and surface modified zeolite is filtered and dried.

12. Process according to claim 10 or 11, wherein the stage of placing zeolite in contact with at least one solution comprising at least one cation of a transition metal has a duration of between 30 minutes and 8 hours.

13. Process according to claim 11 or 12, wherein the stage of placing doped zeolite in contact with a solution comprising at least one quaternary ammonium has a duration of between 12 and 48 hours.

14. Composition comprising at least one zeolite according to any one of claims 1 to 9, or prepared using the method according to any one of claims 10 to 13 and an agent selected from among the (co)polymers of polydimethylsiloxane, acrylic resins, dyes, pigments, binders, organic solvents, fillers.

15. Use of the zeolite according to any one of claims 1 to 9, or prepared using the process according to any one of claims 10 to 13 or of the composition according to claim 14 as an agent to prevent biofilm formation.
